# EUROPEAN PATENT SPECIFICATION

(11) **EP 2 930 646 B1**
(45) Date of publication and mention of the grant of the patent: **03.10.2018**
(21) Application number: 15161869.1
(22) Date of filing: 31.03.2015
(51) Int. Cl.: G06F 21/62

(54) **SYSTEMS AND METHODS FOR ANONYMIZED USER LIST COUNTS**
SYSTEME UND VERFAHREN ZUR ANONYMISIERTEN BENUTZERLISTENZÄHLUNG
SYSTÈMES ET PROCÉDÉS DE COMPTAGE DE LISTES D'UTILISATEURS ANONYMES

(30) Priority: 10.04.2014 US 201461977850 P
(43) Date of publication of application: 14.10.2015
(73) Proprietor: Max-Planck-Gesellschaft zur Förderung der Wissenschaften e.V., 80539 München (DE)
(72) Inventor: Probst Eide, Sebastian, 13088 Berlin (DE); Francis, Paul, 67663 Kaiserslautern (DE); Bauer, Felix, 13088 Berlin (DE); Kretschmer, Matthias, 53757 Sankt Augustin (DE); Berneanu, Cristian Daniel, 032115 Bucharest (RO); Juric, Sasa, 10000 Zagreb (HR)
(74) Representative: Bach, Alexander

(56) References cited:
- US-A1- 2011 208 763
- Istemi Ekin Akkus ET AL: "String Discovery for Private Analytics", , 30 November 2013 (2013-11-30), XP055194235, Retrieved from the Internet: URL:http://www.mpi-sws.org/cont/tr/2013-00 6.pdf [retrieved on 2015-06-08]
- T.-H. HUBERT CHAN ET AL: "Private and Continual Release of Statistics", ACM TRANSACTIONS ON INFORMATION AND SYSTEM SECURITY, vol. 14, no. 3, 1 November 2011 (2011-11-01), pages 1-24, XP055216430, ISSN: 1094-9224, DOI: 10.1145/2043621.2043626
- CYNTHIA DWORK ET AL: "Differential privacy under continual observation", PROCEEDINGS OF THE 42ND ACM SYMPOSIUM ON THEORY OF COMPUTING, STOC '10, 1 January 2010 (2010-01-01), page 715, XP055216429, New York, New York, USA DOI: 10.1145/1806689.1806787 ISBN: 978-1-45-030050-6
- Stanley R M Oliveira ET AL: "Privacy Preserving Frequent Itemset Mining", , 1 January 2002 (2002-01-01), XP055216432, Retrieved from the Internet: URL:http://delivery.acm.org/10.1145/860000 /850789/p43-oliveira.pdf?ip=145.64.254.247 &id=850789&acc=PUBLIC&key=E80E9EB78FFDF9DF .4D4702B0C3E38B35.4D4702B0C3E38B35.4D4702B 0C3E38B35&CFID=717176200&CFTOKEN=76362687& __acm__=1443431939_c4eecd3b2fb58c9c60ee77c 7eb7ac05b [retrieved on 2015-09-28]

## Description

### FIELD OF THE INVENTION

The present invention relates to statistical methods for data analysis. Certain embodiments relate to anonymization of numeric responses produced from database queries.

### BACKGROUND OF THE INVENTION

It is often desired that an analyst be able to obtain aggregate data from a database containing user information without being able to learn anything about individual users in the database. Simply removing names or identification numbers from the database is not effective to prevent individual privacy loss. For instance, if an analyst knows the birthdate, gender, and zip code of an individual in the database (the victim), this alone is often enough information to uniquely identify the victim. The analyst can then form a query specifying this information plus some sensitive information the analyst wishes to learn about the victim, and obtain the answer. For instance, "what is the sum of the salaries of all male individuals born on Dec. 14, 1957, with zip code 67663?" If there is only one such person, the sum of salaries will be that person's salary.

In early prior art, a mechanism to defend against this was simply to not provide an answer unless there are at least K individuals represented in the answer. However, this defense can often be easily circumvented. For instance, the analyst may make the following two queries: 1) "what is the sum of the salaries of all males?", and 2) "what is the sum of the salaries of all males not born on Dec. 14, 1957 and having zip code 67663?" The first query includes all males, whereas the second query includes all males except the victim. By subtracting the second sum from the first, the victim's salary can be computed.

Other prior art addresses this problem by modifying the data in the database itself. One approach is to add noise to numerical values in the database. Another approach is to swap specific fields between users. Yet another approach, called K-anonymity, is to remove the accuracy of data values so that each user in the database looks the same as K-1 other users. These approaches, and their variants, can provide strong anonymity, but often destroy the utility of the data itself.

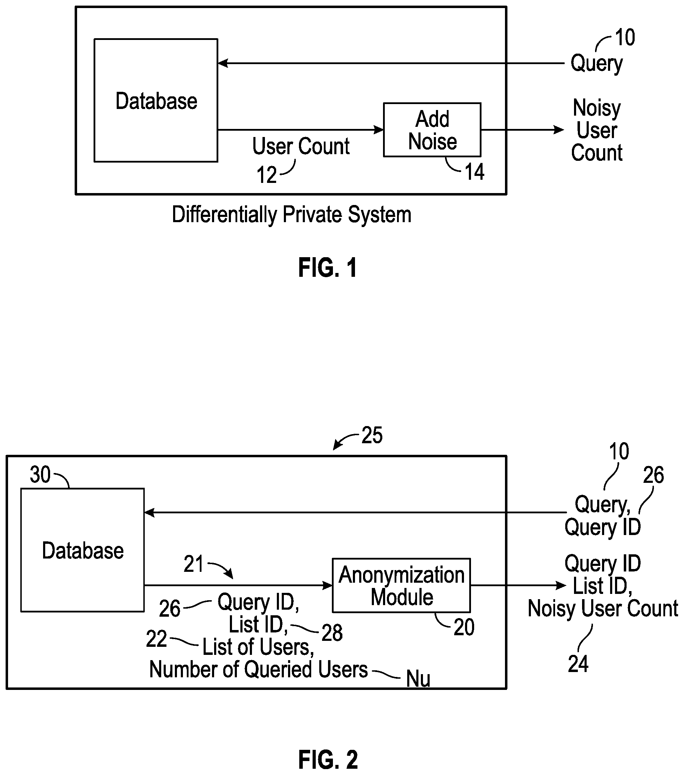

Another prior art approach, "differential privacy," is a method of anonymization whereby answers to queries 10 take the form of user counts 12, and random noise is added 14 to the user counts (see FIG. 1). The phrase "noisy user count" refers to the number that is produced by adding random noise to a user count. In response to a query from an analyst, a database 16 that uses conventional differential privacy will output the noisy user count 18.

To give an example of how this works, suppose the query is "How many users are there that are male, are born on Dec. 14, 1957, with zip code 67663, and have a salary between $90,000 and $100,000?" The true user count would be 1 or 0, depending on whether the victim has that salary or not. Suppose that random noise with a normal distribution and standard deviation of 5 is added. Now the answer might well be 6, or -8. The analyst would have no idea whether the victim has that salary or not. On the other hand, suppose that the query is "How many males in zip code 67663 have a salary between $90,000 and $100,000?" If the true user count is 513, the noisy user count might be for instance 510 or 518. As a result, the analyst obtains a reasonably accurate answer. In this way, a differentially private system can provide both privacy and accuracy.

The problem comes when the analyst is allowed to repeat the query. Assuming the first query, each noisy user count would be taken from a random distribution with an expected value of either 0 or 1. With enough such noisy counts, the analyst could take the average and have high confidence of the true answer. In general, it is not possible to prevent this problem by simply refusing to answer the same query twice. One reason for this is because it may be possible to generate a semantically identical but syntactically different query as a work-around. For instance, another query might be "How many users are there that are male, are born 10 days after Dec. 4, 1957, with zip code 67663, and a salary between $90,000 and $100,000?" This query may identify the very same user, even though it is syntactically a different query.

The generally known solution to this problem is to limit the number of times an analyst may query a differentially private database. However, this is not practical, as repeated identical queries may be useful and important in cases for instance where the contents of a database are constantly changing, so that identical queries may produce different results at different times.

A prior art document is XP055216429, which discloses a method for differential private counting.

Accordingly, there is a need for an anonymizing method and system that improves the security of database systems, while providing accurate answers.

### SUMMARY OF THE INVENTION

Aspects of the present invention provide an anonymization module whose input is a list of users, and whose output is a noisy user count. The list of users may be a set of zero or more User IDs, where each User ID identifies a single user or any other entity whose individual privacy is to be preserved. The noisy count is an approximation of the true user count, which is the number of users in the list of users. The noisy user count may be a real number approximating the true count. The noisy user count may also simply be an indication that the true count is very close to 0, or that the true count is very close to the number of users in the database. A noisy count may also be suppressed when the true count is very close to 0.

In an embodiment, a computer system includes a database configured to receive a query and to produce a list of User IDs and an anonymization module. The anonymization module is configured to receive a list of User IDs and generate a noisy count of the list. The noisy count is generated in a manner that thwarts known methods of cancelling out noise through repeated queries.

These and other objects, features and advantages of the present invention will become apparent in light of the detailed description thereof, as illustrated in the accompanying drawings. The invention is defined by the independent claim.

### BRIEF DESCRIPTION OF THE DRAWINGS

FIG. 1 shows schematically a conventional anonymous database using differential privacy.
FIG. 2 shows schematically an improved anonymization system, according to an embodiment of the invention.
FIG. 3 shows schematically an improved anonymization method implemented by the system shown in FIG. 2.
FIG. 4 shows schematically another improved anonymization method implemented by the system shown in FIG. 2.
FIG. 5 shows schematically another improved anonymization method implemented by the system shown in FIG. 2.
FIG. 6 shows schematically a bloom filter of the system of FIG. 2, in accordance with an embodiment of the present invention.
FIG. 7 shows schematically a list condenser module of the system of FIG. 2, in accordance with an embodiment of the present invention.
FIG. 8 shows schematically an anonymization module and method of the system of FIG. 2, in accordance with an embodiment of the present invention.
FIG. 9 shows schematically an anonymization module and method of the system of FIG. 2, in accordance with another embodiment of the present invention.

### DETAILED DESCRIPTION OF THE PREFERRED EMBODIMENT

Referring to FIG. 2, an embodiment of the present invention provides an anonymization module 20 whose input is a raw answer 21 that includes a list 22 of users, and whose outputs include a noisy user count 24. The list 22 may be a set of zero or more User IDs, where each User ID identifies a single user or any other entity whose individual privacy is to be preserved. The noisy user count 24 is an approximation of a true count (internal to the module 20) of the number of users in the list 22. The noisy user count may be a real number approximating the true count. The noisy user count may also simply be an indication that the true count is very close to 0, or that the true count is very close to the total number of users in the database. A noisy count may also be suppressed when the true count is very close to 0.

The anonymization module 20 typically is implemented in a computing system 25, which may include one or more processors and data storage devices, either physically co-located, and/or physically dispersed and connected in communication with each other via a wide-area network such as the Internet (e.g., a "cloud" system).

The input to the anonymization module 20 may also include a Query ID 26, and, for each list, a List ID 28. The Query ID may be a string or number that is unique among all Query IDs, and the List ID may be a string or number that is unique among all List IDs, or among all List IDs with the same Query ID. There may be multiple lists and List IDs for every query.

The anonymization module 20 works with a database 30, also implemented in, or communicatively coupled to, the computing system 25. The database 30 accepts a query 10 and its optional Query ID 26, and in response to the query, the database 30 sends to the anonymization module 20 the raw answer 21, which includes the list 22 of users as well as the optional Query ID 26 and List ID 28. Thus, the anonymization module 20 is interposed between the database 30 and an analyst who submits the query 10, in order to intercept and modify the raw answer that is output from the database.

The database 30 may also accept a request to create an index, which is a list of users that may take part in a future query. In response to this request, the database 30 may generate an index, which includes a list 22 of users as well as an Index ID 28. The index (list of users) and Index ID may be provided to the anonymization module 20. The anonymization module 20 may store the index and Index ID.

The answer provided to the anonymization module 20 may also contain a number, Nu, which is the total number of users that were in the queried database 30. For example, suppose the database 30 contains 1000 users. The query 10 requests the number of female users. If there are 450 females, then the list of users would contain the User IDs for these 450 females, and the number Nu of queried users would be the number 1000.

The answer 21 provided to the anonymization module 20 may also include the Index ID instead of Nu. The anonymization module 20 may compute Nu as the number of users in the stored index.

Upon receiving an index, the anonymization module 20 may perturb the index by tagging users for duplication or removal. The anonymization module 20 may decide how many users to tag by selecting a random number from some distribution, for instance a uniform distribution with some specified maximum and minimum values, or a normal distribution with some specified standard deviation. Other distributions may also be used. The mean of the distribution may be zero, or may be some other value. If the random number is positive, then that number of users may be tagged for duplication. If the random number is negative, then that number of users may be tagged for removal. The users tagged may be selected randomly from all users in the index.

The number of tagged users may vary depending on the number of users in the index. The larger the number, the more users may be tagged. This may be done by increasing the range of the distribution. For instance, if the distribution is uniform, the maximum and minimum values may be increased. If the distribution is normal, the standard deviation may be increased, and so on.

When the anonymization module 20 receives a raw answer 21 with an associated Index ID 28, it may modify the true count of the answer according to the tagged users for that index. For each user tagged as duplicate which appears in the answer, the true count may be incremented by one. For each user tagged as remove which appears in the answer, the true count may be decremented by one. Unless otherwise indicated, subsequent usage of the term "true count" refers to this modified true count.

The anonymization module 20 may modify the raw answer 21 by adding or subtracting a random number from the module's true count of the list 22 of users. This random number may be selected from some distribution, for instance a uniform distribution with some specified maximum and minimum values, or a normal distribution with some specified standard deviation. Other distributions may also be used. The mean of the distribution may be zero, or may be some other value. The phrase "add noise" refers to this process of modifying the true count.

If the true user count is below some small threshold K1, the anonymization module 20 may silently suppress the answer. "Silently suppress" means that there is no defined output corresponding to the list, including no indication that the answer was suppressed. As used herein, the term "silent" or "silently" refers to taking an action with no notification that the action was taken. Alternatively, the anonymization module 20 may output an indication that the noisy count is too small to report.

If the noisy user count 24 is below some threshold K2, the anonymization module 20 may, in the output, replace the noisy user count with an indication that the noisy count is too small to report. K2 may be larger than K1, but may still be a small number. Alternatively, the anonymization module 20 may silently suppress the noisy count.

If the true count is greater than the number Nu of queried users minus K1, then the anonymization module 20 may, in the output, replace the noisy user count 24 with an indication that the noisy count is too large to report. If the noisy user count is greater than the number Nu of queried users minus K2, then the anonymization module 20 may, in the output, replace the noisy user count 24 with an indication that the noisy count is too large to report. Nu may be the value provided by the database, or it may be the value computed by the anonymization module 20 based on the number of user in the stored index.

In the case where Nu is based on the number of users in the stored index, the anonymization module 20 may alternatively output a noisy count NCi the first time the Nu minus K1 or Nu minus K2 thresholds are exceeded for the given index (instead of outputting "too large to report"). The noisy count NCi may then be stored along with the index. For every subsequent time the Nu minus K1 or Nu minus K2 thresholds are exceeded for the same given index, the stored value NCi may be output.

The amount of noise added to the true count may vary depending on the magnitude of the true count. The larger the true count, the more noise may be added. More noise may be added by increasing the range of the distribution. For instance, if the distribution is uniform, the maximum and minimum values may be increased. If the distribution is normal, the standard deviation may be increased, and so on.

For example, the amount of noise added may be related to a relative error bound. An error bound may be specified in terms of a percentage of the true count. For instance, the error bound may be specified as being within 1% of the true count with high probability. If the distribution is uniform, the maximum and minimum may be set at the true count plus or minus 1% of the true count. If the distribution is normal, the standard deviation may be set at, for instance, 0.5% of the true count. The error bound may be conveyed to the anonymization module 20 along with the list of users and other information. The error bound may be pre-configured into the anonymization module 20.

The anonymization module 20 may, in its output, replace the noisy count 24 with a numerical range within which the noisy count falls. For instance, if the noisy count 24 is 513, the anonymization module may instead indicate a range between 510 and 520. The valid ranges may be pre-determined in advance. The size of the ranges may increase with the size of the noisy count.

In certain aspects of the invention, the anonymization module 20 may add several different noise values to the true count. The different noise values may be adjusted after different numbers of answers. For instance, the anonymization module may add four noise values to each true count, NV1, NV2, NV3, and NV4. NV1 may change after each list of users. NV2 may change after every 10 lists. As an example, NV3 may change after every 100 lists, and NV4 may change after every 1000 lists. This is referred to as layered noise.

Adding layered noise makes it harder for an analyst to determine the true count by repeating queries and taking the average of the noisy counts. This is because the longer-term noise values (i.e. NV3 or NV4) skew the average across many consecutive noisy answers. To overcome this, the analyst would need to repeat the query at long intervals (i.e. every 1000 queries). Since in many scenarios it costs money to make a query, this raises the cost of eliminating noise by averaging.

Often a given query will produce multiple user lists. For instance, in order to generate a histogram of users across different salary ranges, the query may produce one list per salary range. Some queries may produce hundreds or thousands of lists. Often it is the case that any given user should belong in only one or a few of the lists. For instance, each user has only one salary, and so should only be in one list of a salary histogram query.

Accordingly, the anonymization module 20 may limit a number of same-query lists that each user belongs in to some maximum number L1. If a user belongs in more than L1 lists, the anonymization module 20 may silently remove the user from all but L1 lists. The anonymization module 20 may select the L1 lists randomly from all lists the user is in. Limiting the number of lists a user appears in strictly limits the amount of information that may theoretically be learned about that user from the set of lists.

The value of L1 may be conveyed to the anonymization module 20 along with the lists. The anonymization module may also be pre-configured with a maximum acceptable value of L1, L1 max. If the conveyed value of L1 exceeds L1 max, then the anonymization module 20 may refuse to release noisy counts 24 unless it is given authorization. This authorization may, for instance, be in the form of an authorized party's cryptographic signature over the Query ID 26 and L1 value.

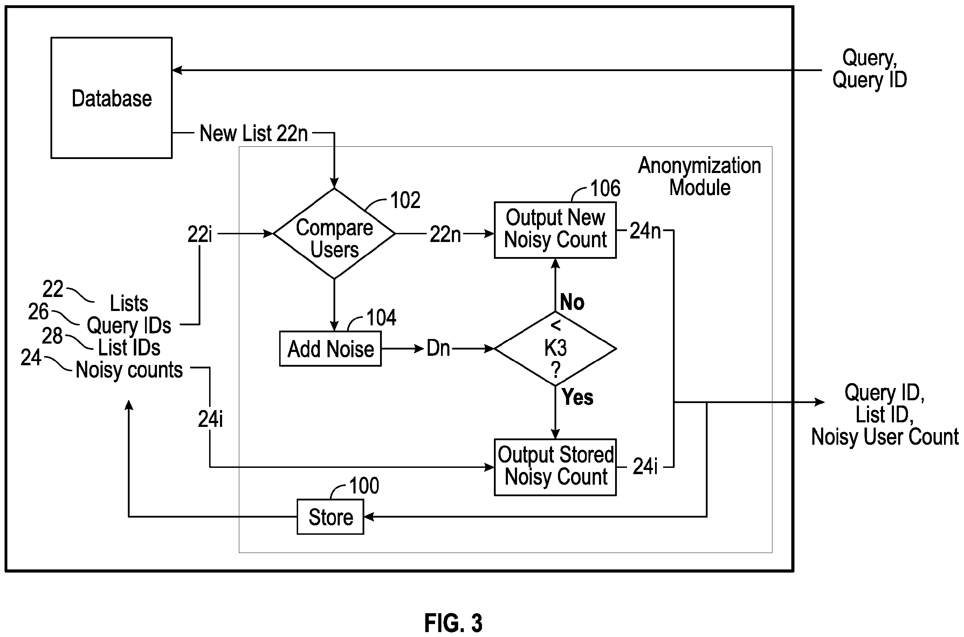

Referring to FIG. 3, the anonymization module 20 may store 100 some or all of the lists 22, including the Query IDs 26, the List IDs 28, and the noisy counts 24 that correspond to each of the lists 22. The lists 22 may be stored within the computing system 25 in a device that is physically co-located with the anonymization module 20 (e.g. within a same computer case, within a same building), or physically dispersed from the anonymization module 20 (e.g., in communication with the anonymization module 20 via a wide-area network). When the anonymization module 20 receives a new list 22n, it may compare, at 102, that list 22n with each or some of the stored lists 22. For each comparison of the new list 22n with one of the stored lists 22, the anonymization module 20 may count the number of users that are in one list but not the other (the stored list 22 or the new list 22n). The anonymization module 20 may add noise to this count, at 104, thereby producing for each comparison a noisy difference Dn.

In case the noisy difference Dn for some particular stored list 22i is less than some small value K3 (refer to the new list 22n and the particular stored list 22i as "matching" lists), the anonymization module 20 may output, at 108, the stored noisy count 24i of the particular stored list 22i. In so doing, an analyst repeating an identical or very similar query will simply get the same answer as for a previous query, and will not be able to average out the noise. However, in case the anonymization module 20 traverses the stored lists 22 without finding a value of the noisy difference Dn that is less than K3, the anonymization module 20 may output, at 106, the noisy count 24n of the new list 22n, so that an analyst may get a reasonably accurate response to a query with a novel answer. The value chosen for K3 may increase with the size of the lists.

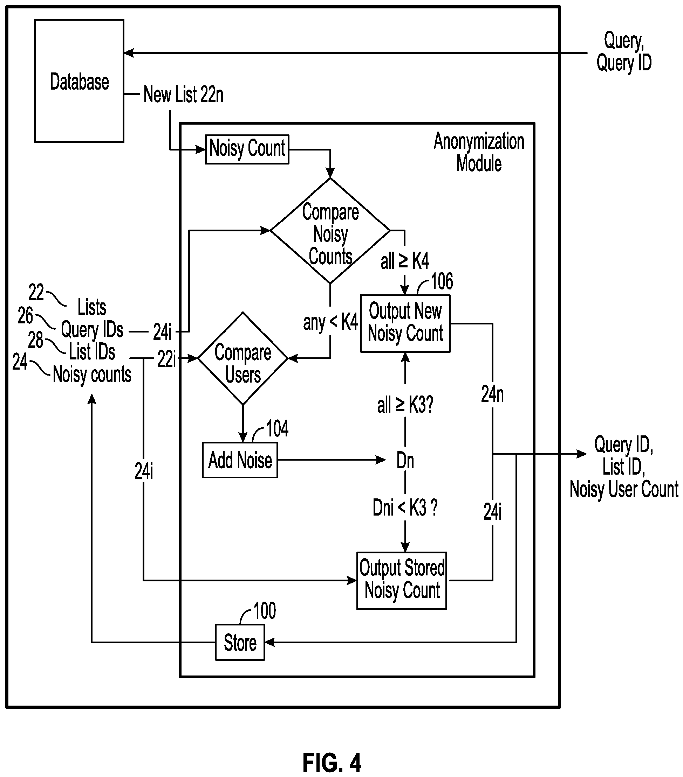

FIG. 4 shows an optimization of the preceding procedure, wherein the new list 22n may be compared only with stored lists 22 for which the noisy count 24n of the new list 22n is within some value K4 from the noisy counts 24 of the stored lists 22. The value chosen for K4 should be such that matching lists are compared with very high probability, and many or most non-matching lists are not compared.

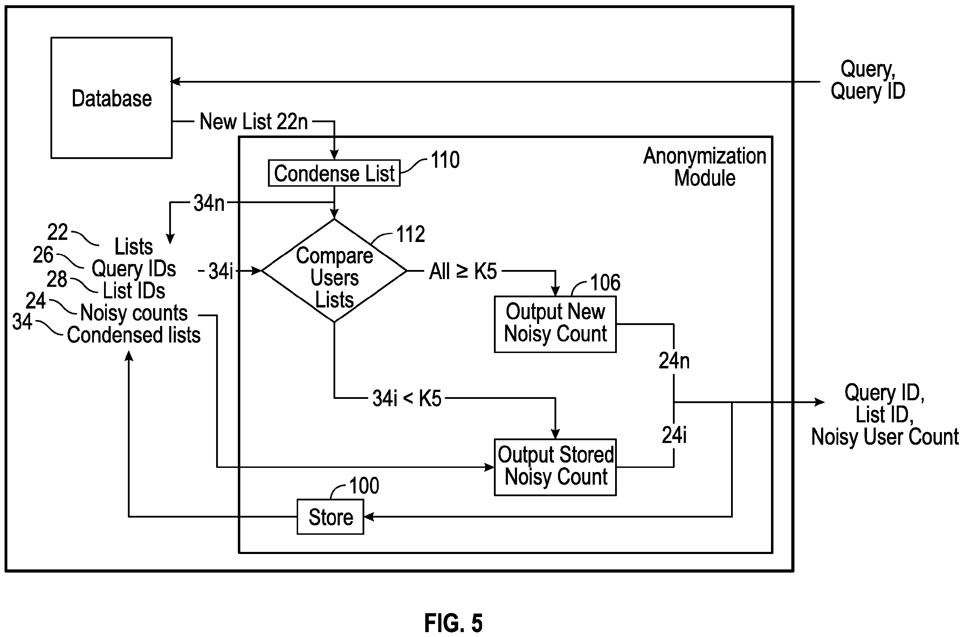

Rather than store complete lists 22, the anonymization module 20 may store a condensed version 34 of each list, as shown in FIG. 5. A property of condensed lists 34 may be that, when two condensed lists are compared, it can be determined with high probability that the two corresponding complete lists are matching lists (that is, the same or nearly the same). Thus, when the anonymization module 20 receives a new list 22n, it may first condense the new list, at 110, then compare the new condensed list 34n against stored condensed lists 34, at 112. If the new condensed list 34n and a particular stored condensed list 34i are determined to be matching lists, the anonymization module 20 may output for the new list 22n the previously outputted noisy count 24i of the stored list 22i that corresponds to the matching stored condensed list 34i.

In an exemplary embodiment, the condensed list may be a single value which is based on the exact user list. In other words, a given user list will produce one value, and a different user list will produce a different value. We refer to this value as the user list hash. By comparing two user list hashes, it may be determined if two lists are identical or different. In this case, two lists match if they are the same, but not if they are nearly the same. The user list hash may be produced by placing the user IDs in numerical order, and hashing the resulting list. Alternatively, the user list hash may be produced by individually hashing each user ID, and then taking the sum of the hashes. Other methods may also be utilized without departing from the broader aspects of the present invention.

In the exemplary embodiment shown in FIG. 5, a new list 22n may be condensed, at 110, by processing all of its User IDs 23n1..n through a bloom filter. The bloom filter is configured such that if it outputs a new condensed list 34n that is identical to a stored condensed list 34i, then the two complete lists 22n, 22i are identical with very high probability. Moreover, the bloom filter is configured so that, if it outputs a condensed list 34n that differs from the stored condensed list 34i by only K5 or fewer bit positions, where K5 is a small number, then the two corresponding complete lists 22n, 22i are nearly identical with very high probability. The value chosen for K5 may grow with the size of the lists 22 or with the number of hash functions used by the bloom filter.

Alternatively, a condensed list 34 may be obtained from only selected Users from the list 22. A method of selecting Users from the list 22 may be one whereby the following two properties are satisfied. First, the selected Users for two matching lists should be the same or nearly the same. Second, it must not be possible for an analyst to predict which Users will be selected.

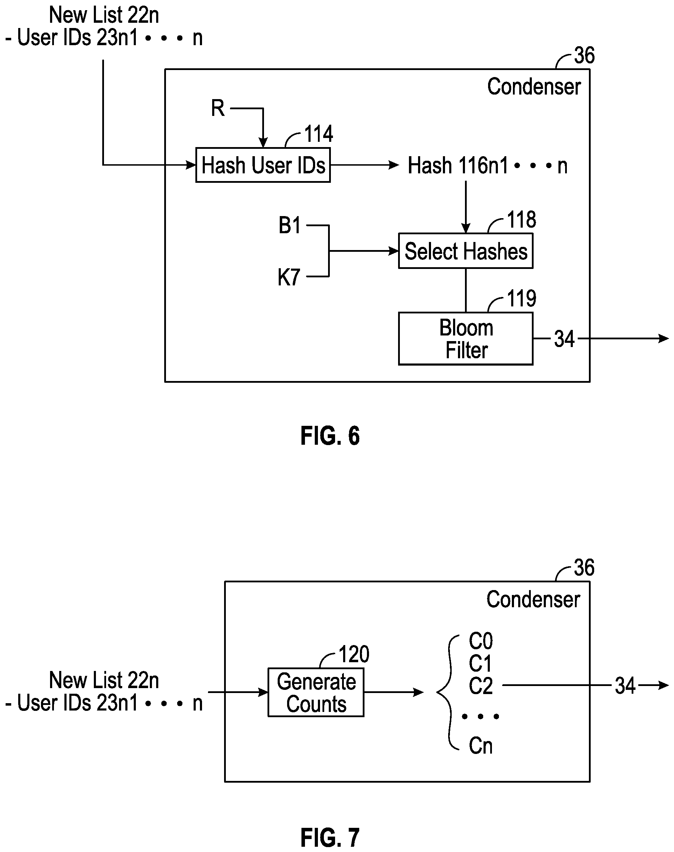

To achieve both properties, as shown in FIG. 6 a list condenser module 36 may generate or be supplied with a one-time random number R. Each time a condensed list 34 is produced, the list condenser 36 first generates, at 114, for each User ID 23n1..n in the complete list 22, a corresponding hash 116n1..n of the concatenation (or XOR) of the User ID with R.

The module then selects, at 118, those Users for whom the last B1 bits of the User ID hash 116 are all a given value, for instance zero. The value of B1 may vary depending on the size of the list 22. Alternatively, the list condenser module 36 may order the hash values numerically, and select the first K7 users. Other methods may also be utilized without departing from the broader aspects of the present invention. The resulting condensed list of users may be stored as the condensed list. Alternatively, the resulting condensed list of users may be applied to the bloom filter 119, and the resulting output is stored as the condensed list.

Alternatively, the condensed list may be produced by the list condenser module 36 as shown in FIG. 7. From a new list 22n, the filter 36 generates, at 120, a set of counts, C0 through Cn. C0 is the count of User IDs 23 where the last B2 bits of each user ID form the number 0. C1 is the count of User IDs where the last B2 bits of each user ID form the number 1. C2 is the number of User IDs where the last B2 bits of each user ID form the number 2, and so on. The set of counts form the condensed list 34. Two lists 22 are identical with high probability if the corresponding sets of counts 34 are identical. Two lists are nearly identical with high probability if the corresponding sets of counts are nearly identical. Other methods of condensing lists may also be utilized without departing from the broader aspects of the present invention.

In the case where a new user list 22n and a particular stored list 22i are matching (using either full or condensed lists, and either exact or close matches), instead of reporting the noisy count 24i of the particular stored list 22i, the anonymization module 20 may report a new noisy count, but with a larger noise range than the previous noisy count, for instance larger max and min values, or a larger standard deviation. With each subsequent new user lists that match a particular stored list 22i, the amount of noise for each new noisy count may be increased. The amount of increase may be such that the analyst is never able to confidently guess the true count.

Alternatively, the noise is increased in larger increments after a certain number of new matching lists. For instance, after every M matches, the noise level may be increased. As an example, suppose that the initial noise level is Gaussian with standard deviation SD=5, and M=45. For the first 44 matches, a new noisy count is reported with SD=5. On the 45^{th} match, the noise level may be increased to for instance SD=7. Noisy counts for the next 44 matches may have SD=7, and on the 90^{th} match, the SD may be increased to SD=9, and so on.

Alternatively, the noise may be increased using layered noise. For instance, the first M matches for a given stored list may have a single layer of noise. The next M2 matches may have two layers, where the noise value for the second layer changes every M matches. The next M3 matches may have three layers, and so on. Other methods of adding noise with subsequent matches may be used.

The methods described herein make it very difficult, though not impossible, for an analyst to overcome or work around the noise added to lists. In order to do this, the analyst must be able to submit numerous queries such that each will produce a list that includes both an unknown subset of users for which the analyst wishes to estimate the true count, and a known subset of users for which the analyst already knows the count. The known subsets must 1) have different user populations from query to query, and 2) be large enough that the lists are not considered matching (thus obviating the methods described above for defeating noise).

By running such a sequence of queries, the analyst can obtain a set of noisy counts where the unknown subset makes the same contribution to the true count across multiple lists. By taking an average, and subtracting the averaged true counts of the known subsets, the analyst can estimate the true count of the unknown subset.

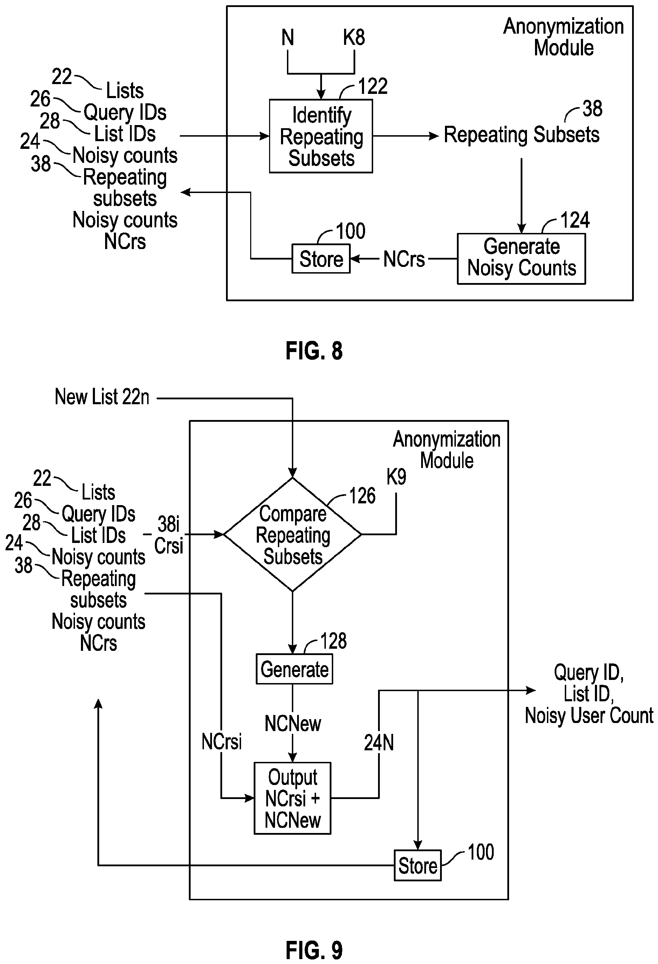

To defend against such attacks, then as shown in FIG. 8 the anonymization module 20 may identify 122 identical or near-identical repeating subsets 38 across multiple lists 22. A repeating subset 38 may be identified as a list of at least K8 users that are common to N or more lists. Once a repeating subset 38 has been identified, the anonymization module 20 generates 124 a one-time noisy count NCrs for the subset 38, and stores 110 the repeating subset 38, the noisy count NCrs, and a true count Crs.

Having identified repeating subsets 38, then when a new list 22n is compared with stored lists 22 for matches, if a matching list 22i is found, then the corresponding stored noisy count 24i may be output as already described with reference to FIG. 3 or FIG. 4. If, however, a matching list 22i is not found, then as shown in FIG. 9 the anonymization module 20 may compare, at 126, each new list 22n against the repeating subsets 38. A new list 22n can be said to match one of the repeating subsets 38 if the new list contains at least (Crs - K9) of the users in the repeating subset, where Crs is the count of users in the repeating subset. The value of K9 is typically small, but may grow with the size of Crs.

After finding a largest repeating subset 38i (which may be a null set) that matches the new list 22n, the anonymization module 20 then generates 128 a noisy count NCnew based on the number of users that are in the new list 22n and not in the largest matching repeating subset 38i. The anonymization module 20 then outputs and stores, at 100, the new list's noisy count 24n as NCrsi + NCnew. In this fashion, an analyst is not able to average away the noise that is permanently associated with the repeating subset 38i.

The anonymization module 20 may store, for each user ID, the frequency with which the user appears in answers. For instance, the anonymization module 20 may store that a given user has appeared in 28 of 100 answers, or in 147 of 1000 answers. Users that appear in an unusually high frequency of answers are referred to as high-touch users. When the anonymization module 20 receives an answer, it may remove high-touch users from the answer. In other words, the true count is reduced by the number of users removed. The anonymization module 20 may choose a random number of high-touch users to remove. The anonymization module 20 may remove up to a maximum of K10 high-touch users. The number of users removed may increase with the true count of the answer.

To determine whether a user is high-touch, the anonymization module may compute the probability of a given user's appearance frequency relative to the average. For instance, if the average user appears in 3 of 100 answers, but a given user appears in 10 of 100 answers. The probability that a user appears in 10 of 100 answers, given a probability of 3% per answer can be computed according to a binomial distribution as 0.0009. The anonymization module may define a user as high-touch if the probability of its appearance frequency is below some very small value K11. For instance, K11 may be 0.00001 (1 in 100000).

The average appearance frequency may be computed over all users, or over all users in the indicated index, or over all users in the answer. The appearance frequency may be computed over different scales. For instance, the last 100 answers, the last 1000 answers, the last 10000 answers, and so on.

Although the anonymization module 20 has been described as a distinct module with specific inputs and outputs, those skilled in the art will apprehend that the implementation of the anonymization module may be as software integrated within the database.

In an embodiment, an anonymizing method for a database system is provided. The method includes the steps of receiving a new list of user IDs in response to a new query, comparing the new list with at least one stored list to determine a new user count, the new user count being a number of users that are in the new list but not the stored list, generating a noisy difference value by adding noise to the new user count, comparing the noisy difference value to a first threshold value stored in memory, outputting the noisy count corresponding to the stored list if the noisy difference value is less than the first threshold value, and outputting a new noisy count for the new list if the noisy difference value is greater than the first threshold value. In an embodiment, the method may also include the steps of receiving a plurality of lists of user IDs and storing at least one of plurality of lists of user IDs as the at least one stored list. In an embodiment, the method may include generating a noisy count for each of the stored lists and storing the noisy count for each of the stored lists. In an embodiment, the first threshold value is chosen based upon the size of the at least one stored list. In an embodiment, the new list is only compared with the at least one stored list if the noisy difference and the noisy count for the at least one stored list are within a predetermined value of each other. In an embodiment, the at least one stored list is a condensed stored list and the method may include, after receiving the new list, condensing the new list into a condensed new list and comparing the condensed new list with the condensed stored list. In an embodiment, the method may include the steps of determining whether the condensed new list and the condensed stored lists are matching lists and, if the condensed new list and the condensed stored list are matching lists, outputting for the new list a noisy count of the stored list that corresponds to the matching condensed stored list. In an embodiment, the condensed stored list is a single value. In an embodiment, the steps are performed by an anonymization module communicatively coupled to a database. In an embodiment, the at least one stored list is stored within the anonymization module. In an embodiment, the new list is a plurality of new lists received in response to the query and, wherein the method may also include the steps of determining the number of lists in which a user belongs, and if the user belongs in more than a threshold number of lists, removing the user from all but the threshold number of lists.

## Claims

1. An anonymizing method for a database system, comprising the steps of:
receiving a new list of user IDs in response to a new query, where a user ID
identifies a single user or any other entity whose individual privacy is to be preserved;
comparing the new list with at least one stored list to determine a new user count, the new user count being a number of users that are in the new list but not the stored list;
generating a noisy difference value by adding noise to the new user count;
comparing the noisy difference value to a first threshold value stored in memory;
outputting a noisy count corresponding to the stored list if the noisy difference value is less than the first threshold value; and
outputting a new noisy count for the new list if the noisy difference value is greater than the first threshold value.

2. The method according to claim 1, further comprising the steps of:
receiving a plurality of lists of user IDs; and
storing at least one of plurality of lists of user IDs as the at least one stored list.

3. The method according to claim 2, further comprising the step of:
generating a noisy count for each of the stored lists; and
storing the noisy count for each of the stored lists.

4. The method according to claim 3, wherein:
the first threshold value is chosen based upon the size of the at least one stored list.

5. The method according to claim 3, wherein:
the new list is only compared with the at least one stored list if the noisy difference and the noisy count for the at least one stored list are within a predetermined value of each other.

6. The method according to claim 2, wherein:
the at least one stored list is a condensed stored list; and
the method includes, after receiving the new list, condensing the new list into a condensed new list and comparing the condensed new list with the condensed stored list.

7. The method according to claim 6, further comprising the step of:
determining whether the condensed new list and the condensed stored lists are matching lists; and
if the condensed new list and the condensed stored list are matching lists, outputting for the new list a noisy count of the stored list that corresponds to the matching condensed stored list.

8. The method according to claim 7, wherein:
the condensed stored list is a single value.

9. The method according to claim 1, wherein:
the steps are performed by an anonymization module communicatively coupled to a database.

10. The method according to claim 9, wherein:
the at least one stored list is stored within the anonymization module.

11. The method according to claim 1, wherein:
the new list is a plurality of new lists received in response to the query; and
wherein the method includes the steps of determining the number of lists in which a user belongs, and if the user belongs in more than a threshold number of lists, removing the user from all but the threshold number of lists.

## Patentansprüche

1. Anonymisierungsverfahren für ein Datenbanksystem, umfassend die Schritte:
Erhalt einer neuen Liste von Benutzer-IDs als Antwort auf eine neue Abfrage,
wobei eine Benutzer-ID einen einzelnen Benutzer oder eine andere Entität identifiziert, deren individuelle Privatsphäre gewahrt werden soll;
Vergleichen der neuen Liste mit mindestens einer gespeicherten Liste, um eine neue Benutzeranzahl zu ermitteln, wobei die neue Benutzeranzahl eine Anzahl von Benutzern ist, die sich in der neuen Liste befinden, aber nicht in der gespeicherten Liste;
Erzeugen eines verrauschten Differenzwertes durch Hinzufügen von Rauschen zur neuen Benutzeranzahl;
Vergleichen des verrauschten Differenzwertes mit einem ersten im Speicher abgelegten Schwellwert;
Ausgabe einer verrauschten Anzahl entsprechend der gespeicherten Liste, wenn der verrauschte Differenzwert kleiner als der erste Schwellwert ist; und
Ausgabe einer neuen verrauschten Anzahl für die neue Liste, wenn der verrauschte Differenzwert größer als der erste Schwellwert ist.

2. Verfahren nach Anspruch 1, umfassend ferner die Schritte:
Empfangen einer Vielzahl von Listen von Benutzer-IDs; und
Speichern mindestens einer von mehreren Listen von Benutzer-IDs als die mindestens eine gespeicherte Liste

3. Verfahren nach Anspruch 2, umfassend ferner den Schritt von:
Erzeugen einer verrauschten Anzahl für jede der gespeicherten Listen; und
Speicherung der verrauschten Anzahl für jede der gespeicherten Listen.

4. Verfahren nach Anspruch 3, wobei:
der erste Schwellwert anhand der Größe der mindestens einen gespeicherten Liste gewählt wird.

5. Verfahren nach Anspruch 3, wobei:
die neue Liste nur dann mit der mindestens einen gespeicherten Liste verglichen wird, wenn die verrauschte Differenz und die verrauschte Anzahl für die mindestens eine gespeicherte Liste innerhalb eines vorgegebenen Wertes zueinander liegen.

6. Verfahren nach Anspruch 2, wobei:
die mindestens eine gespeicherte Liste eine verdichtete Liste ist; und
die Methode umfasst, nach Erhalt der neuen Liste, das Verdichten der neuen Liste zu einer verdichteten neuen Liste und das Vergleichen der verdichteten neuen Liste mit der verdichteten gespeicherten Liste.

7. Verfahren nach Anspruch 6, umfassend ferner den Schritt von:
Bestimmen, ob die verdichtete neue Liste und die verdichteten gespeicherten Listen übereinstimmende Listen sind; und
wenn die verdichtete neue Liste und die verdichtete gespeicherte Liste übereinstimmende Listen sind, wird für die neue Liste eine verrauschte Anzahl der gespeicherten Liste ausgegeben, die der übereinstimmenden verdichteten gespeicherten Liste entspricht.

8. Verfahren nach Anspruch 7, wobei:
die verdichtete Liste ein Einzelwert ist.

9. Verfahren nach Anspruch 1, wobei:
die Schritte von einem Anonymisierungsmodul durchgeführt werden, das kommunikativ mit einer Datenbank gekoppelt ist.

10. Verfahren nach Anspruch 9, wobei:
die mindestens eine gespeicherte Liste im Anonymisierungsmodul gespeichert wird.

11. Verfahren nach Anspruch 1, wobei:
die neue Liste eine Vielzahl von neuen Listen ist, die als Antwort auf die Anfrage erhalten wurden; und
wobei das Verfahren die folgenden Schritte umfasst: Bestimmen der Anzahl von Listen, in die ein Benutzer gehört, und wenn der Benutzer in mehr als einer Schwellenanzahl von Listen gehört, Entfernen des Benutzers von allen außer der Schwellenanzahl von Listen.

## Revendications

1. Procédé d'anonymisation pour un système de base de données, comprenant les étapes de :
recevoir une nouvelle liste d'identificateurs d'utilisateur en réponse à une nouvelle requête, où un identificateur d'utilisateur identifie un utilisateur unique ou toute autre entité dont la vie privée doit être préservée ;
comparer la nouvelle liste avec au moins une liste stockée pour déterminer un nouveau nombre d'utilisateurs, le nouveau compte d'utilisateurs étant un compte d'utilisateurs qui se trouvent dans la nouvelle liste mais pas dans la liste stockée ;
générer une valeur de différence avec bruit en ajoutant du bruit au nouveau compte utilisateur ;
comparer la valeur de différence avec bruit à une première valeur de seuil stockée en mémoire ;
émettre un compte avec bruit correspondant à la liste stockée si la valeur de différence avec bruit est inférieure à la première valeur seuil ; et
émettre un nouveau compte avec bruit pour la nouvelle liste si la valeur de différence avec bruit est supérieure à la première valeur seuil.

2. Procédé selon la revendication 1, comprenant en outre les étapes consistant à :
recevoir une pluralité de listes d'identifiants d'utilisateur ; et
le stockage d'au moins une liste de plusieurs listes d'identifiants d'utilisateur en tant qu'au moins une liste stockée.

3. Procédé selon la revendication 2, comprenant en outre l'étape de :
la génération d'un compte avec bruit pour chacune des listes stockées ; et
le stockage du nombre de bruits pour chacune des listes stockées.

4. Procédé selon la revendication 3, dans lequel :
la première valeur seuil est choisie en fonction de la taille d'au moins une liste stockée.

5. Procédé selon la revendication 3, dans lequel :
la nouvelle liste n'est comparée à la au moins une liste mémorisée que si la différence avec bruit et le compte avec bruit pour la au moins une liste stockée sont à l'intérieur d'une valeur prédéterminée l'un de l'autre.

6. Procédé selon la revendication 2, dans lequel :
l'au moins une liste stockée est une liste stockée condensée ; et
la méthode consiste, après réception de la nouvelle liste, à condenser la nouvelle liste en une nouvelle liste condensée et à comparer la nouvelle liste condensée avec la liste stockée condensée.

7. Procédé selon la revendication 6, comprenant en outre l'étape de :
déterminer si la nouvelle liste condensée et les listes stockées condensées correspondent aux listes ; et
si la nouvelle liste condensée et la liste stockée condensée correspondent à des listes correspondantes, l'affichage pour la nouvelle liste d'un compte avec bruit de la liste stockée correspondant à la liste condensée correspondante.

8. Procédé selon la revendication 7, dans lequel :
la liste condensée stockée est une valeur unique.

9. Procédé selon la revendication 1, dans lequel :
les étapes sont effectuées par un module d'anonymisation couplé communicativement à une base de données.

10. Procédé selon la revendication 9, dans lequel :
l'au moins une liste stockée est stockée dans le module d'anonymisation.

11. Procédé selon la revendication 1, dans lequel :
la nouvelle liste est une pluralité de nouvelles listes reçues en réponse à la requête ; et
dans laquelle le procédé comprend les étapes consistant à déterminer le nombre de listes auxquelles un utilisateur appartient, et si l'utilisateur appartient à plus d'un nombre seuil de listes, à retirer l'utilisateur de toutes les listes sauf le nombre seuil de listes.
